Europäisches Patentamt

(19) European Patent Office

Office européen des brevets

(11) Publication number: **0 008 585**
**B1**

(12) **EUROPEAN PATENT SPECIFICATION**

(45) Date of publication of patent specification: **19.05.82**

(51) Int. Cl.³: **F 16 F 7/00, B 64 C 27/00**

(21) Application number: **79930014.0**

(22) Date of filing: **02.08.79**

(54) Vibration absorber and use thereof in a helicopter.

(30) Priority: **04.08.78 US 931083**
**04.08.78 US 931084**
**04.08.78 US 931085**

(43) Date of publication of application:
**05.03.80 Bulletin 80/5**

(45) Publication of the grant of the patent:
**19.05.82 Bulletin 82/20**

(84) Designated Contracting States:
**BE CH DE FR GB IT**

(56) References cited:
**DE - A - 2 547 955**
**FR - A - 407 732**
**FR - A - 2 129 524**
**US - A - 2 586 043**
**US - A - 2 736 393**
**US - A - 2 796 149**
**US - A - 3 005 520**
**US - A - 3 085 657**
**US - A - 3 536 165**
**US - A - 3 540 809**
**US - A - 3 917 246**

(73) Proprietor: **UNITED TECHNOLOGIES CORPORATION**
**1, Financial Plaza**
**Hartford, CT 06101 (US)**

(72) Inventor: **Mard, Kenneth Chris**
**160, Wilbrook Road**
**Stratford, Connecticut 06497 (US)**
Inventor: **VonHardenberg, Paul Warren**
**R.F.D. 2**
**Southbury, Connecticut 06488 (US)**
Inventor: **Washburn, Sylvester John**
**28, Lopus Road Extension**
**Beacon Falls, Connecticut 06403 (US)**
Inventor: **Lavoie, Edward**
**23, Ridgewood Drive**
**Milford, Connecticut 06460 (US)**

(74) Representative: **Weydert, Robert et al,**
**Office Dennemeyer S.à.r.l. 21-25 Allée Scheffer**
**P.O. Box 41**
**L-Luxembourg (LU)**

Courier Press, Leamington Spa, England.

Vibration absorber and use thereof in a helicopter

Background of the invention
Field of the invention

This invention relates to a vibration absorber adapted to be fixedly attached to a vibration-prone system to cooperate with the principal vibration excitation source which primarily generates vibrations in a given direction so as to control system vibrations and comprising a base means and a selected mass means connected by pendular connecting means to the base means for support therefrom.

Description of the prior art

In the fixed vibration absorber prior art the absorbers are basically fixed frequency absorbers which are capable of absorbing vibration over a relatively small range of frequency of the principal excitation source. Typical of these absorbers are the swastica-type absorber shown in US Patent 3,005,520 and the battery absorber presently used in helicopters, which is basically a spring mounted weight and generally of the type disclosed in European Patent Application 79 93 0009. 0. These prior art absorbers are fixed frequency absorbers which are capable of absorbing vibrations over a relatively small range of rotor RPM. In addition, they are generally heavy, create substantial friction, and have bearings which are susceptible to wear.

Bifilar-type vibration absorbers have conventionally been used solely on rotating mechanisms, such as crankshafts of automobiles and aircraft engines and on helicopter rotors as shown in US patent 3,540,809. In these installations, the centrifugal force generated by rotation. of the mechanism involved is necessary for the operation of the bifilar-type vibration absorber. In a fixed position vibration absorber of the type sought in this application, centrifugal force is not present. In a fixed position vibration absorber, the force is generated by a spring connected within the absorber either between the masses or between one mass and the base.

Another prior art absorber is shown in US Patent 3,536,165 but it should be noted that this is not a bifilar vibration absorber, that is a high friction and hence a high damping absorber and therefore a low amplification absorber so that it does not have the advantages of our bifilar vibration absorber.

A vibration absorber as described under the heading "Field of the Invention" is known from the French Patent 407 732. This French Patent discloses a vibration absorber having a mass mounted by pendular connecting means on a vibration-prone system. Under the excitation of the vibrational forces acting in the given direction the mass oscillates about its mounting point. Due to this oscillating movement the vibrations acting in said one direction are absorbed, but at the same time other vibrations acting in a direction normal to said one direction will be produced.

The object of the invention is to improve the known vibration absorber of pendular construction such that generation of vibrations in a second direction is avoided while absorbing vibrations in the principal direction and such that it may operate at a fixed natural frequency throughout $\pm 45°$ of absorber pendular motion.

To solve the object of the invention the vibration absorber is characterized by a further selected mass means of equal mass connected by a further pendular connecting means to said base member for support therefrom, the two mass means being mounted on said base means for mirror-image pendular motion, and by spring means operatively connected between said mass means in preloaded condition to exert a force on said mass means to thereby establish the natural frequency thereof and of the vibration absorber, and to also cause said mass means to move in coincident, mirror-image pendular motion so that motion of said mass means produces additive forces in said given direction to absorb the vibration force established by said principal source, and so that all other forces not acting in the given direction mutually cancel.

In a vibration absorber having these essential features of the invention the mass means coact to impart additive loads in the direction of action of vibration from the principal excitation force. All other forces generated by the pendular motion of the opposed mass means will be mutually cancelling. The spring rate of the spring means is preferably selected to compensate for spring rate reduction normally caused by pendular excursions of at least $\pm 45°$.

The vibration absorber has the advantage of being low in weight and small in envelope. It utilizes the pendular principle to take advantage of low inherent damping, low friction, low maintenance, and high reliability characteristics, and utilizes a spring of selected spring rate to compensate for the non-linear pendulum effect of the bifilar at high amplitudes.

The vibration absorber utilizing pendular, preferably bifilar or trifilar principles minimizes friction, and hence is a minimal damping absorber. This minimal friction and low damping characteristic of our absorber results in higher absorber amplification, that is a higher quotient of mass motion divided by aircraft motion, so that higher mass reaction loads can be realized to control fuselage vibrations. Thus, lower damping in our vibration absorber results in lower weight required to achieve the desired vibration suppression.

It is an important teaching of our invention to utilize spring means, preferably a compressed coil spring member, acting on the movable mass means in our pendular-type vibration absorber so that a particular selected compression in the spring height establishes the tuning frequency of the absorber for a given helicopter rotor RPM, or other principal exitation source. The spring rate is selected to linearize the system so that the absorber natural frequency is substantially invariant. This invariant feature is important in maintaining high amplification and high dynamic mass motions in the vibration absorber so as to permit the reduction of absorber weight.

The vibration absorber spring means impose maximum internal loads on the mass means when the mass means are at their end travel, maximum angular positions in their arcuate, pendular excursions, since the mass means impose maximum compression force and displacement of the spring members at these maximum angular positions to thereby effect linearization of the vibration absorber so that its natural frequency is non-variant throughout its full range of pendular motion up to $\pm45°$.

However, the natural frequency of the vibration absorber may be varied as a function of the system principal vibration excitation source so that the vibration absorber is always operating at maximum effectiveness and so that the frequency range over which the vibration absorber is effective to control system vibration is increased.

According to the embodiment of claim 13 the mass members may be supported from a base member from at least three parallel plate members extending in the direction of dynamic mass motion and wherein the plate members are fabricated so that they react dynamic mass member loads at a station of modified I-shaped cross-section in the plate member, and transmit the reacted load into the helicopter fuselage or other vibration prone fixed system through a structural platform which is solidly attached in conventional fashion to the fuselage. The mass members are supported from the base member at three pendular connecting stations, which are offset in two perpendicular coplanar directions so as to provide geometric stability to the dynamic mass members to prevent roll and yaw tumbling motions thereof, and the mass members may be supported from said base members by solid, one-piece pin members extending through aligned, equal diameter apertures in the plate members of the base member and the mass members, which pins have circumferential, selectively tapered flanges thereon to reduce or eliminate friction between the dynamic mass members and the base member during operation.

The pendular-type vibration absorber may have pins which are in compression loading at all times and continuously roll, rather than skid, in their coacting apertures throughout the full mode of operation of the vibration absorber.

Other features and advantages of the present invention may be seen by referring to the following description and claims, read in conjunction with the accompanying drawings.

Brief description of the drawings

Fig. 1 is a graph showing helicopter fuselage vibration plotted against rotor RPM to show the operation of the prior art fixed vibration absorbers.

Fig. 2 is a schematic representation of one embodiment of our vibration absorber.

Fig. 3 is a schematic representation of a portion of the connection between the base and the mass member to produce the desired low friction, low inherent damping, pendular result.

Fig. 4 is a schematic representation of the preferred embodiment of our vibration absorber.

Fig. 5 is a top view, partially broken away and with control mechanism illustrated as attached thereto, of the preferred embodiment of our vibration absorber shown in Fig. 4.

Fig. 6 is a side view, partially broken away, of the vibration absorber of Fig. 4.

Fig. 7 is a view, partially broken away, taken along line 7—7 of Fig. 6.

Fig. 8 is a view, partially broken away, taken along line 8—8 of Fig. 5.

Fig. 9 is a cross-sectional showing of an actuator which could be used with our vibration absorber.

Fig. 10 is a showing of the natural frequency control mechanism utilized with our absorber in the helicopter environment.

Fig. 11 is a graph of the fluid pressure acting on or the internal force generated in the pendular mass means plotted against rotor RPM.

Fig. 12 is a partial showing of the vibration absorber used as a fixed frequency fixed position absorber.

Fig. 13 and 14 are cross-sectional illustrations of spacer means used in combination with the spring or springs in the Fig. 12 embodiment.

Fig. 15 is a graph of the vibration absorber natural frequency ratio plotted against pendular angular motion to illustrate the difference in operation between this linear vibration absorber and a conventional pendular vibration absorber.

Fig. 16 is an illustration of the pendular motion of the dynamic mass members of our vibration absorber to illustrate the amplitude of motion, angular motion amplitude, pendular arm length, and coil spring compression motion of the dynamic mass member.

Fig. 17 is a perspective showing of the base member of the vibration damper with the other parts of the vibration absorber removed therefrom.

Description of the preferred embodiment

The vibration absorber taught in this application will be described in the environment of a helicopter in which the vibration absorber is fixedly mounted in a helicopter fuselage to coact with the principal helicopter vibration excitation source, namely, the rotor or rotors, to reduce the vibration imparted to the fuselage thereby.

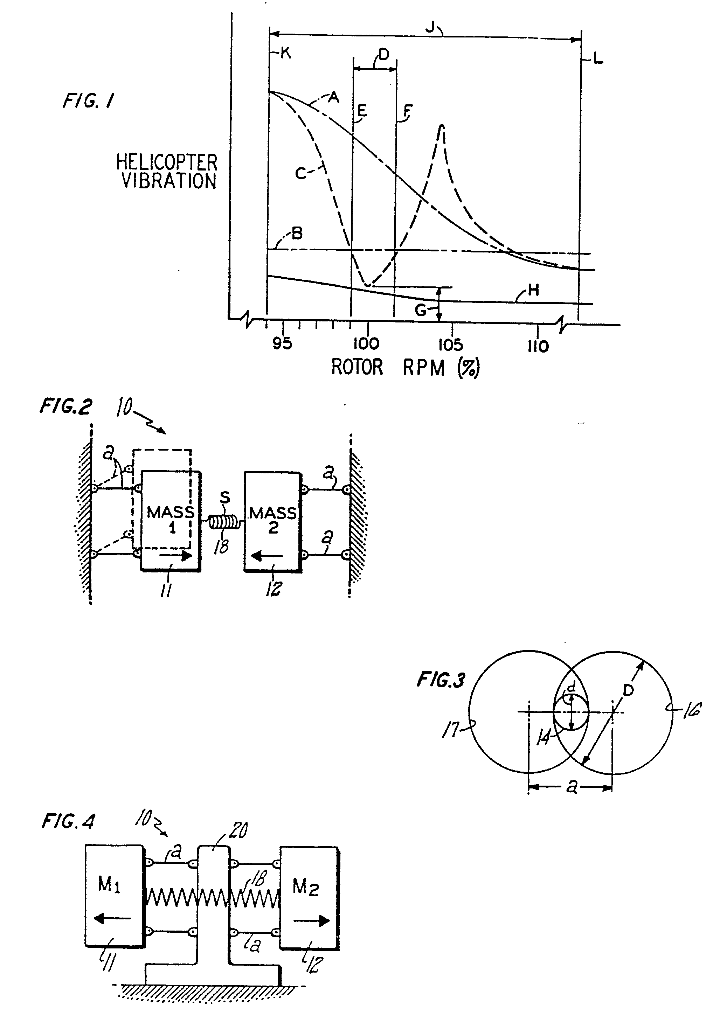

To appreciate the operation and advantages of this variable frequency vibration absorber, the short-comings of the fixed frequency, fixedly positioned prior art vibration absorbers will be discussed. Referring to Fig. 1 we see a graph A of helicopter fuselage vibrations plotted against helicopter rotor RPM. It is well known that the vibration generated by a rotor and the response of the helicopter structure thereto varies and is a function of rotor RPM, as shown typically by graph A. Line B indicates the vibration line below which acceptable fuselage vibration occurs. The prior art fixed frequency, fixed position vibration absorbers would operate generally along graph C, and it will be noted that such a vibration absorber is effective over range D between lines E and F. It will be noted that range D covers a small variation or span in rotor RPM over which the prior art vibration absorbers are effective. Range D is determined by the mass ratio of the absorber, that is the ratio of the weight of the absorber to the effective weight of the sub-structure in which the absorber is fixedly mounted, and in part by the inherent damping of the vibration absorber and the substructure. With the prior art absorbers, to obtain a relatively wide range C of absorbing, a very heavy vibration absorber would be required. Dimension G, the minimum achievable vibration level, would be determined by the amount of inherent damping in the absorber, and in part by the inherent substructure damping, and in part by the aforementioned mass ratio. If, theoretically, a vibration absorber could be utilized which has zero inherent damping, maximum vibration absorption would occur so as to achieve minimum fuselage vibration, i.e., dimension G would be reduced. Such a system cannot be realized in practice.

The objective of this vibration absorber is to be able to get maximum vibration absorption, indicated by any point along line H over a greater range J of rotor RPM, lines K and L representing minimum and maximum necessary operating or excitation RPMs of the helicopter or other principal sub-structure.

To understand the purpose and operation of this vibration absorber, it is first necessary to understand the difference between a vibration absorber and a vibration damper. A vibration damper serves to dissipate the energy of the vibrations imparted to the fuselage by the rotor. Vibration dampers can use friction principles or any type of energy damping principle. A vibration absorber, on the other hand, does not dissipate already established vibration energy but establishes a second vibratory mode in the system so as to coact with the principal system mode, the substructure mode, to produce a resultant mode which has minimum vibration. Stated another way, a vibration damper damps already created principal system vibrations, while a vibration absorber coacts with the system principal vibration excitation source to change its characteristics to a low vibration system.

A schematic representation of one form of this vibration absorber 10 is shown in Fig. 2. In Fig. 2 masses 11 and 12, of selected mass, are supported from base members by suspension arm members a, which can be considered to be pendulous members as illustrated by the phantom line motion for mass 11. In practice, pendular arm a is actually the pin and bushing connection shown representatively in Fig. 3 in which pin member 14 of diameter d is positioned in hole 16 of one of the mass members 11 or 12 and overlapping hole 17 in the base member so as to produce an equivalent pendulum motion of pendulum arm a, in which arm a equals the difference between hole diameter D and pin diameter d, i.e. a=D—d. Spring 18 is positioned between masses 11 and 12 and serves to draw them together and thereby preloads the selected masses so suspended to establish an internal force therein and thereby establish the natural frequency of masses 11 and 12, and therefore the natural frequency of absorber 10. The natural frequency of masses 11 and 12, and hence absorber 10, is determined by the preload of spring 18 and the mass of mass members 11 and 12, which are of equal mass. Spring 18 performs another important function, in particular, it makes linear the non-linear characteristics of the pendular construction. To explain this linear/non-linear concept, reference will be made to Fig. 2. If in Fig. 2 only the preload form spring 18 and not the spring rate is considered, i.e. if spring 18 is considered removed for all practical purposes (assuming for example that the Fig. 2 is rotated 90° so that the force of gravity would be applied thereto in that new orientation, or that in the depicted position only the preload of the spring, as a substitute for gravity, acts on the bifilar system) the natural frequency of the conventional bifilar system reduces with amplitude of motion of the masses 1 and 2 as arms a pivot to move mass 11 from its solid line to its phantom line position. This reduction in natural frequency of the mass member with amplitude causes the system to be non-linear and limits its range of effectiveness. This non-linear vibration characteristic of a pendular system occurs immediately upon any angular motion although a practical angle of excess would typically be 10°. We could prevent the system from swinging beyond 10° by increasing the length of the pendulum arms a but this would be undesirable because this would produce a heavier system requiring a larger space envelope.

With spring 18 present, however, as mass 11 swings from its solid line to its phantom line position, the changing force of spring 18 acting on mass 11 is increased, thereby tending to keep the system linear by keeping the equivalent absorber spring rate and natural frequency of the bifilar system shown in Fig. 2 at its original value. In this vibration absorber, we maintain the low weight and small space envelope advantage of a short pendulum arm $a$, yet produce a linear system by controlling the natural frequency of the vibration absorber by manipulation of the force generated by spring 18 and imparted to the masses 11 and 12.

The preferred embodiment of vibration absorber 10 is shown schematically in Fig. 4 in which masses 11 and 12, of selected mass, are supported from central base member or ground 20 by pendular-type connections represented by arms $a$ and have internal force applied thereto to establish system natural frequency by spring 18, of selected preload and spring rate, which serves to force masses 11 and 12 to separate.

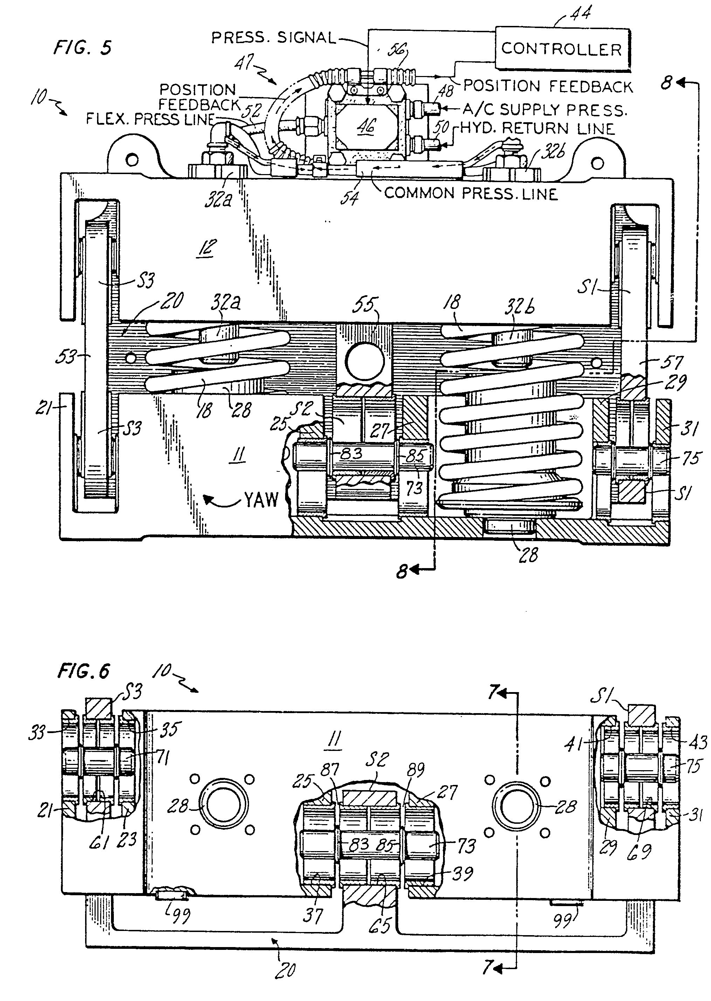

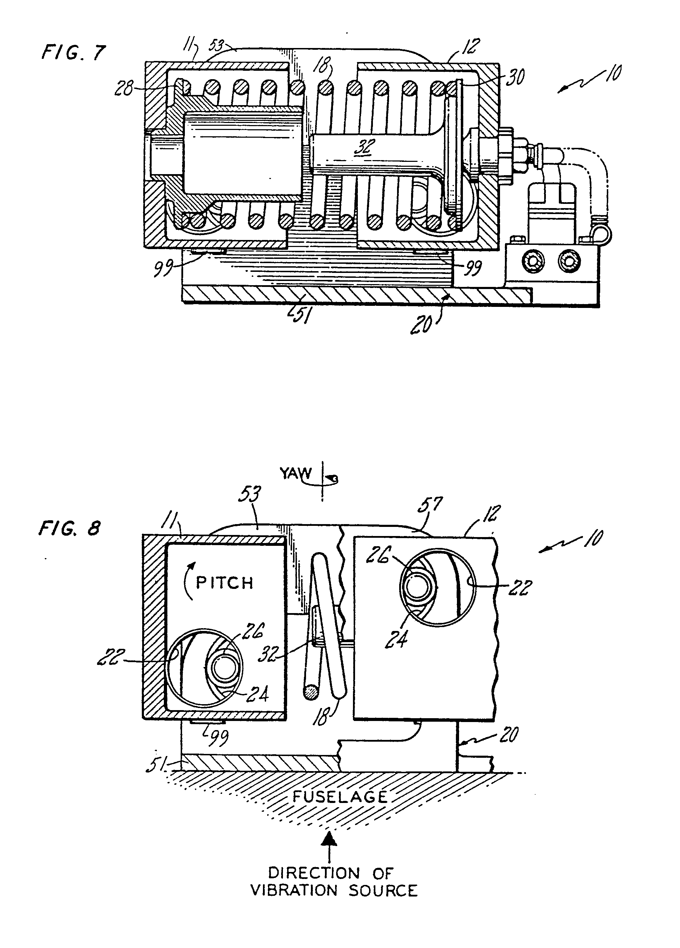

For a more particular description of the preferred embodiment reference will now be made to Figs. 5—8 in which base member 20, which is fixed to the fuselage as shown in Fig. 8, supports selected mass members 11 and 12 therefrom in pendular fashion. Each mass member 11 and 12 is supported from the base member 20 by three pendular connections similar to Fig. 3, thereby forming a trifilar connection, and each of the three connections including, as best shown in Fig. 8, an aperture 22 in masses 11 and 12 and an overlapping aperture 24 is base 20 and each having a pin member 26 extending therethrough. As best shown in Fig. 5, each mass means 11 and 12 is connected to base member 20 at three such pendular connecting stations along the mass length, which stations are designated as S1, S2 and S3. As best shown in Fig. 6, the pendular connection at station S2 is at the bottom of each mass while pendular connections S1 and S3 are at the top of each mass. In view of this three station connection, reminiscent of the three-legged stool, the mass is given geometric stability as supported from base 20 in both the yaw direction shown in Figs. 5 and 8 and the pitch direction shown in Fig. 8. It will therefore be seen that to this point our vibration absorber includes two mass members 11 and 12 supported in selectively spaced connecting stations from base member 20. The connections may be of the type more fully disclosed in U.S. Patent 3,540,809. In Fig. 7, one of two spring members 18 is shown extending between masses 11 and 12, utilizing spring retainers 28 and 30. Springs 18 are of selected spring rate so that when installed and preloaded, the springs provide the necessary internal force to mass members 11 and 12 to establish a selected natural frequency of masses 11 and 12 and therefore of vibration absorber 10. With spring 18 assembled as shown in Fig. 7 and preloaded, it will be observed that the spring serves to impart a separating force to mass means 11 and 12.

The construction of base member 20, which is preferably of one-piece construction, is very important to this invention. As best shown in Fig. 17, base member 20 comprises flat platform 51 extending longitudinally of the base member as shown in Fig. 17 and constituting a solid base for the base member 20 so that platform 51 may be attached in any conventional fashion, such as by nuts and bolts, to the fixed vibration prone system which our vibration absorber is intended to operate in. Three parallel, laterally extending plate members 53, 55 and 57 extend perpendicularly from platform 51 and extend in the lateral direction, which is the direction or plane of desired mass member motion. End plate members 53 and 57 are identical in shape and project a substantially greater height out of platform 51 than does central plate member 55. Plate members 53, 55 and 57 each have equally laterally spaced apertures 59 and 61, 63 and 65, 67 and 69 therein, respectively. Apertures 59—69 are of equal diameter and their axes extend perpendicular to plate members 53, 55 and 57, and therefore perpendicular to the direction of desired dynamic mass motion for the vibration absorber. Apertures 59 and 61, and 67 and 69 are the same height above platform 51, while apertures 63 and 65 are substantially closer thereto. By viewing Fig. 17 it will be observed that apertures 59—69 form two sets of three equal diameter apertures having parallel axes and with each aperture positioned at the corner of a triangle. The first three aperture set consists of apertures 61, 65 and 69, while the second aperture set consists of apertures 59, 63 and 67. These two aperture sets are parallel to one another and, in view of the fact that the apertures in each set are positioned at the corner of a triangle, they form the basis, when joined to mass members 11 and 12 as more fully disclosed in Figs. 5 and 6, for three point pendular of bifilar-type connection between the mass members and the base member, which three points of pendular connection are off-set in two perpendicular directions, which are co-planar. To be more specific, for example, aperture set 59, 63 and 67 includes three longitudinally offset apertures 59, 63 and 67, and also includes aperture 63 which is vertically offset from equal height apertures 59 and 67. This three point triangular-type connection between the mass members and the base member provide geometric stability so as to prevent both roll and yaw tumbling of the mass members with respect to the base member.

With respect to the construction of plate members 53, 55 and 57 and in particular their construction in the areas where the apertures pass therethrough, it is important to note that these plate members provide substantial structural support to the mass members which will be supported therefrom in that, as best shown in Fig. 17 and illustrated with respect to plate member 57, apertures 67 and 69 have two parallel beam portions 71 and 73 extending laterally across the plate member above and below the apertures and structural web section 75 extending between beam members 71 and 73 at a station between apertures 67 and 69 so as to form an I-shaped structure, formed by beam members 71 and 73 and support web 75, at the load carrying station of plate member 57 in which dynamic mass member supporting apertures 67 and 69 are located. In fact, this I-shaped structure is strengthened by the fact that its ends are closed at portions 77 and 79 to form a closed box construction consisting of sections 71, 77, 73 and 79, with structural web section 75 extending through the center thereof. Mass member loads reacted by plate member 57 at apertures 67 and 69 are imparted to plate member 57 at this high strength structural section and therefrom into platform member 51 for transmittal to the fixed vibration prone system, such as the fuselage of the helicopter. The load carrying demands on plate member 57 might be such that the plate may include lightening and maintenance access holes 81 and 83. It will be noted that while plate member 57 has been used to describe the structure of the plate members in the vicinity of the apertures, plate members 53 and 55 are similarly constructed.

As best shown in Figs. 5 and 6, the dynamic mass members 11 and 12 extend longitudinally along opposite lateral sides of base member 20 and each is preferably of one-piece construction and fabricated to include plate members 21, 23, 25, 27, 29 and 31 which extend parallel to plate members 53, 55 and 57 of base member 20 and extend in the direction of mass member motion or in the plane of mass member motion. The mass member plate members constitute three sets, with the first set 21 and 23 being positioned on opposite sides of and selectively spaced longitudinally with respect to base member plate member 53, the second set 25 and 27 being positioned on opposite sides of base plate member 55 and selectively spaced longitudinally with respect thereto, and third set 29 and 31 positioned on opposites of base plate member 57 with selected longitudinal spacing therebetween.

As best shown in Figs. 5 and 7, each parallel compression coil spring 18 is received at its opposite ends in spring end retainers 28 and 30, which retainers are supported in mass members 11 and 12 as shown. In addition, the opposite ends of coil spring 18 are ground to properly fit into retainers 28 and 30 and thereby aid the spring static stability so that it needs no support between its ends.

Each mass member plate member has an aperture therein of equal diameter with the apertures in all other mass member plate members and of equal diameter with the apertures in the plate members of the base member 20. Each plate member aperture is concentric about axes which are not shown but which are perpendicular to the plate member and parallel to each other. As best shown in Figs. 5 and 6, these mass members apertures include apertures 33, 35, 37, 39, 41 and 43 in plate members 21—31, respectively. As will be seen in Figs. 5 and 6, the apertures in the plate members of the base member overlap with the apertures in the plate members of the mass members and each has a cylindrical, flanged bushing inserted therein as shown, which bushing is fabricated on anti-friction material, such as hardened stainless steel.

A solid, substantially cylindrical pin extends through each set of aligned apertures as shown in Figs. 5 and 6. These pin members which are visable are designated as 71, 73 and 75 but it should be noted that each mass member 11 and 12 is connected to and supported from base member 20 at three pendular or trifilar type connecting stations S1, S2 and S3, which stations are defined by the overlapping apertures of the base members and the mass members and the pin members. The pin members 71—75 are fabricated of an anti-friction material such as a carbonized steel. As can be best seen in Fig. 6, these pendular connecting stations S1, S2 and S3 are longitudinally offset from each other to provide geometric stability between the mass members and the base members to prevent roll moments therebetween, and are also vertically offset to provide the necessary geometric stability to prevent yaw moments between the mass members and the base member. Due to this three position pendular, tri-filar-type connection between each mass member 11 and 12 and the base member 20, each mass member moves in pendular, arcuate translational motion with respect to the base member so as to be parallel thereto at all times. To minimize friction and hence damping of the system, each pin member includes a tapered circumferential flange illustrated in Figs. 5 and 6 in connection with pin 73 only and indicated at 83 and 85, however all pin members have such tapered flanges. Flanges 83 and 85 are positioned in the longitudinal spacing 87 and 89 between the bushing apertures through which pin member 73 extends and are tapered in a radially outward direction so as to be of minimal thickness at their outer periphery and hence serve to produce minimum friction contact between the relatively movable mass members and base member during the full mode of pendular operation therebetween.

It will therefore be seen that this vibration absorber produces minimal friction, solely the minimal flexing friction of the coil spring members 18 and the rolling friction of roller members 71—75. This vibration absorber is therefore low in damping, high in amplification, with lower weight supported masses 11 and 12, thereby reducing the weight of the absorber and the overall aircraft.

With respect to spring members 18, it is important that the spring deflection, free length and mean diameter be selected so that the coil spring is statically stable when its ground ends are positioned between spring retainers 28 and 30. The importance of this spring static stability is that it does not require additional spring support mechanisms, such as a center spring guide, since such would add weight, friction and damping to the system to thereby reduce the effectiveness of the vibration absorber. It should be noted that maximum spring deflection is achieved when first, the absorber is tuned to its highest operating frequency and second, the absorber is operating at its maximum pendular amplitude so as to avoid excessive transverse spring deflections, since any touching of parts could cause fretting or friction, both of which are detrimental to absorber life or performance. In addition, both the transverse and axial natural frequencies of the spring are selected to be detuned from the system excitation frequencies so as to avoid excessive spring motions, since any touching of parts caused thereby could produce fretting or friction, both of which are detrimental to absorber life or performance.

Actuator 32, shown in Fig. 7, is positioned in series with spring 18 between masses 11 and 12. Actuator 32 may be actuated initially to impose a force to selectively preload spring 18 and establish the initial natural frequency of vibration absorber 10. Actuator 32 may thereafter be actuated to either increase or decrease the natural frequency of vibration absorber 10. When actuator 32 is controlled as a function of helicopter rotor RPM, the actuator is then varying the deflection of spring 18 to thereby vary the internal forces on mass means 11 and 12, and hence to vary the natural frequency of absorber 10 as a function of rotor RPM from its initial natural frequency caused by initial preloading or from its last actuator established natural frequency. In this fashion, the natural frequency of vibration absorber 10 is controlled as a function of rotor RPM to coact with vibration excitation forces imposed on the fuselage by the rotor to thereby reduce fuselage vibration.

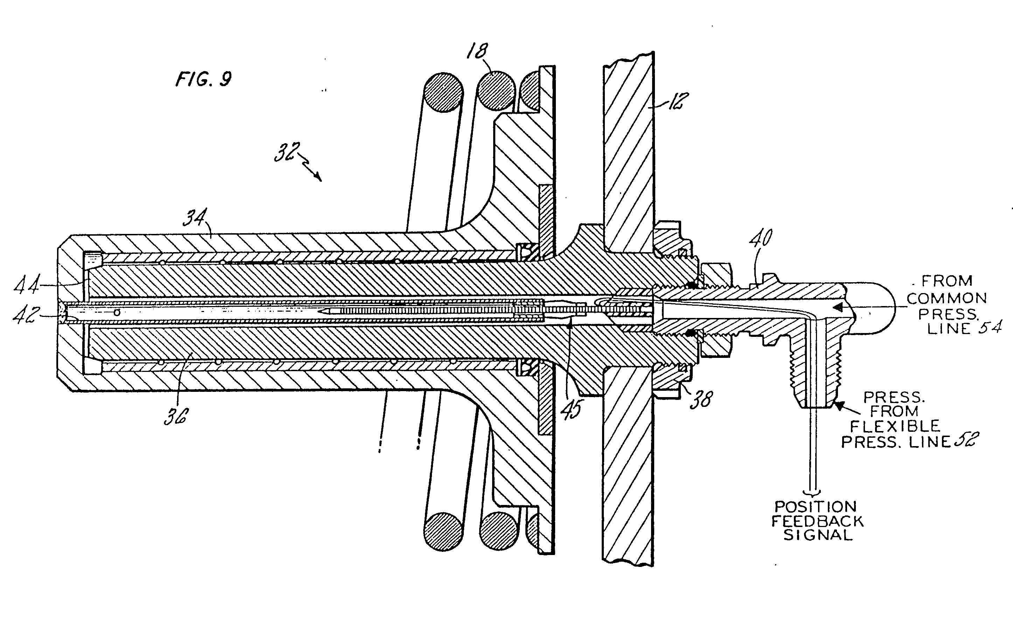

The construction of actuator 32 may best be understood by viewing Fig. 9. The actuator consists of telescoping sleeve members 34 and 36, the former being translatable with respect to the latter, and the latter being fixedly connected to the mass means 12 by conventional connecting means 38. Selectively pressurized fluid from a control system to be described hereinafter enters adapter 40 and flows therethrough and through passage 42 into hydraulic chamber 44 where it exerts a force causing sleeve member 34 to move leftwardly with respect to fixed member 36 to thereby compress spring 18 as it so moves. This compression of spring 18 adds to the internal force applied to mass means 11 against which it directly bears through retainer 28. Similarly, due to the fluid pressure so exerted on fixed sleeve 36, which is attached to mass means 12, actuator 32 similarly created greater internal force in mass means 12. Actuator 32 also includes a position transducer 45 which is of conventional design and operates in typical rheostat fashion to send a position feedback signal, representative of the position of movable member 34 as determined by the pressure in chamber 44, to the actuator control system 47. There are other prior art actuators which could be used in this vibration absorber, for example, the positioning actuator sold under part number A-24553-2 by Moog, Inc., Aerospace Division of Proner Airport, East Aurora, New York 14052. Another prior art actuator is an electric screw-type actuator with feedback of the type manufactured by Motion Controls Division of Simmonds Precision, Cedar Knolls, New Jersey.

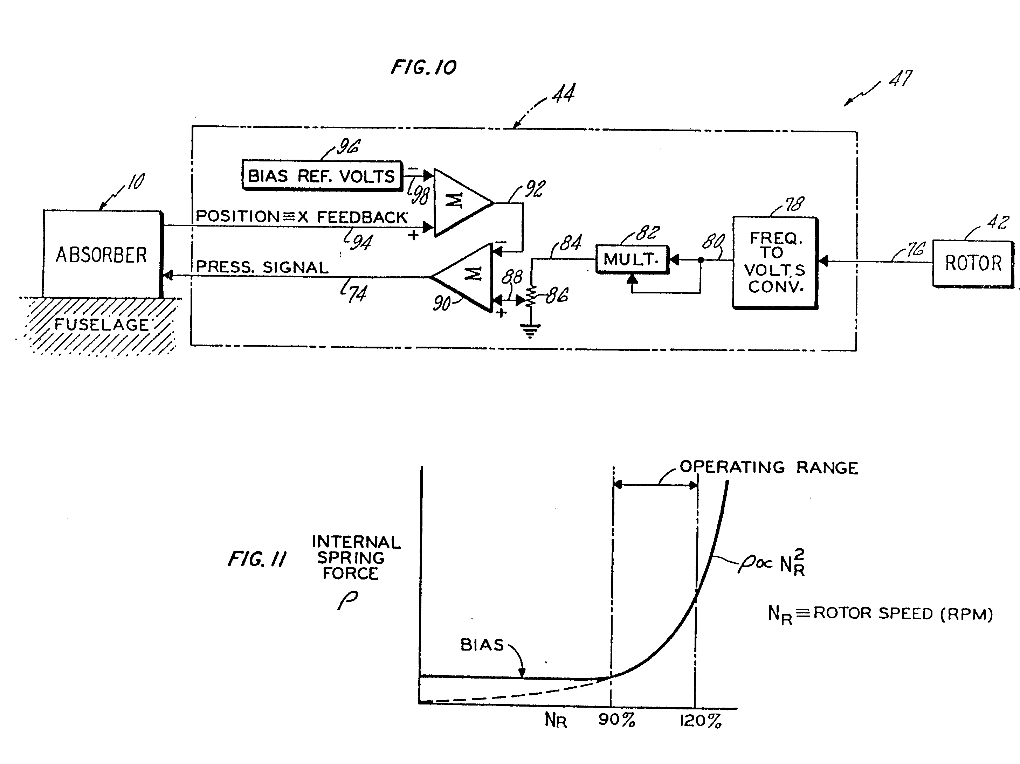

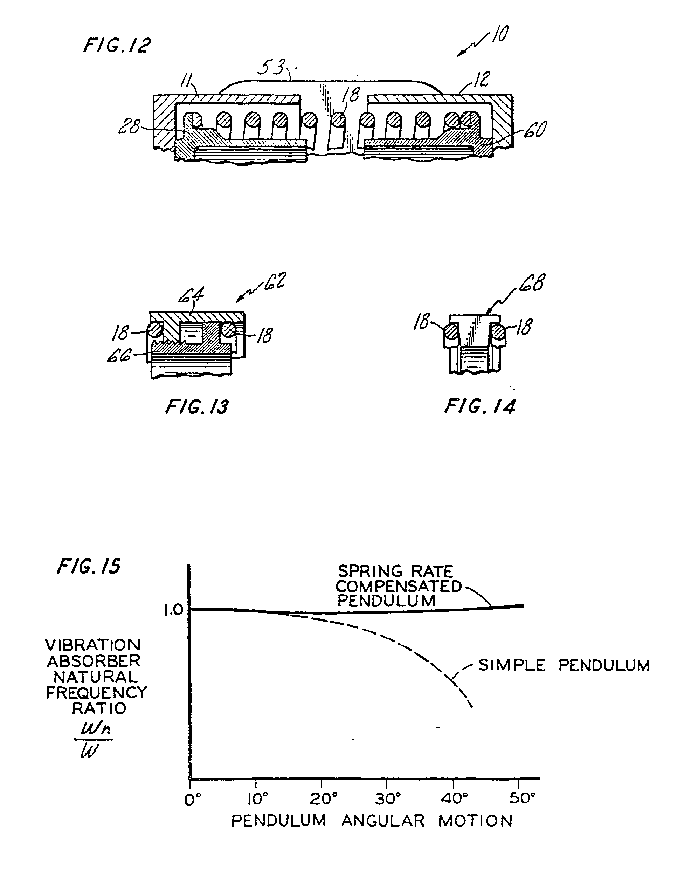

Attention is now directed to Fig. 10 for an explanation of the control system 47 used to vary the natural frequency of absorber 10 as a function of rotor RPM. As shown in Fig. 10, helicopter rotor 42, possibly through a tachometer, imparts a rotor speed (RPM) signal to controller 44. The controller 44 operates to provide a signal on a line 74 to the absorber 10 that is proper to control the valves in the absorber 10 to provide displacement as the square of rotor speed within an operating range of rotor speeds as is described with respect to Fig. 11 hereinafter. Assuming the rotor 42 provides a tachometer signal on a line 76 which varies in frequency as a function of rotor speed, conversion to a DC voltage proportional to rotor speed may be made by any conventional frequency-to-voltage converter 78, which may, for instance, comprise a simple integrator, or a more complex converter employing a Teledyne Philbrick 4708 frequency-to-voltage conversion circuit, or the like. In any event, a DC signal on a line 80 as a function of rotary speed of the rotor 42 is provided to both inputs of an analog multiplier circuit 82, of any well known type, so as to provide a signal on a line 84 which is a function of the square of rotor speed. A potentiometer 86 is provided to allow a gain adjustment, whereby the overall effect of the control can be adjusted to suit each particular aircraft. This provides a suitable signal on a line 88, which is some constant times the square of rotor speed, to a summing amplifier 90, the other input of which is a feedback error signal on a line 92 which combines the actual position of the actuator 32 in response to the position sensing potentiometer 45 (Fig. 9), on a line 94, and a bias reference provided by a source 96 on a line 98. Thus the output of the summing amplifier 90 provides a signal on the line 74 to direct the actuator to a position determined as some constant times the square of rotor speed, which position is maintained in closed loop fashion by the feedback signal on a line 94, as modified by the bias provided by the source 96. The bias resulting from the source 96 will cause the pressure signal on a line 74 to bring the actuator 32 to a selected initial position, thereby compressing spring 18 as shown in Fig. 7 to an initial position which will produce the desired initial natural frequency in mass means 11 and 12 and therefore absorber 10. This actuator preloading is done so that actuator 32 can reciprocate either leftwardly or rightwardly and thereby vary the internal force being imposed upon mass means 11 and 12 in response to both rotor RPM increases and rotor RPM decreases. It will be realized that if actuator 32 were installed in its end travel position, it could respond to rotor RPM changes in one direction only.

The controller 44 is thus programmed to send a hydraulic pressure signal proportional to rotor RPM to absorber 10 and absorber 10 provides an actuator position feedback signal to the controller 44. It will be noted that this absorber is fixedly mounted from the fuselage.

Attention is now directed to Fig. 5 for a further explanation of this control system 47. The pressure signal from controller 44 goes to hydraulic valve 46, which receives aircraft supply pressure through line 48 and has hydraulic return line 50. Selectively pressurized hydraulic fluid passes through flexible pressure line 52 into common pressure line 54 from which it enters the two actuators 32a and 32b to selectively change the force being exerted by springs 18 on mass means 11 and 12 and hence the natural frequency thereof and of the vibration absorber 10. Similarly, position feedback signals from each actuator 32a and 32b are brought through position feedback line 56 to controller 44.

This control system 47 is an open loop position feedback system because it is preprogrammed, that is, it has been calibrated in the laboratory to return to a given position. It will be evident to those skilled in the art that this control system also has the capability of acting as a closed loop position feedback system.

The operation of our absorber is illustrated in the graph shown in Fig. 11 in which the pressure in the flexible pressure line 52 or the internal force imparted to the mass means 11 and 12 by spring 18 is plotted against rotor RPM ($N_R$). Biasing put into the system causes the pressure to be flat in the low RPM range, which is below the operating range, and then follows the curved graph portion representative of the formula $p^\alpha N_R^2$ where $p$ is the pressure and $N_R$ is the rotor speed (RPM). It will therefore be seen that over the region designated as "Operating Range" the force acting upon the vibrations absorber 10 to vary its natural frequency varies as a function of rotor speed, in particular, rotor speed squared. This "Operating Range" is approximately 90 percent—120 percent.

Positive stops 99, which may be made of rubber, are attached to mass means 11 and 12 as best shown in Fig. 6 and serve to limit the useful motion of the mass members relative to the base member, to prevent metal-to-metal contact between the mass members and the associated vibration absorber parts.

It will therefore be seen that our variable frequency vibration absorber is an improved vibration absorber utilizing bifilar principles to take advantage of the lightweight, small dimensional envelope, the low inherent damping thereof, the high reliability thereof, the low friction generated thereby, and the minimum maintenance required therefore. This vibration absorber also utilizes a spring to compensate for the non-linear pendulum effect of the pendular-type vibration absorber at high amplitudes, thereby making the absorber linear. It will further be realized that this vibration absorber changes its natural frequency as a function of rotor RPM so that the absorber will always be operating at its maximum level of effectiveness to reduce fuselage vibration due to rotor excitation. The absorber spring 18 is a selected spring rate which is controlled to initially preload the selected bifilar mass members to establish the initial natural frequency of the mass members and the absorber. The vibration absorber is thereafter controlled to vary the amount of loading by the spring on the absorber mass members as a function of rotor RPM to permit effective vibration absorption over a large span of rotor operating frequencies.

While the vibration absorber has been described in the helicopter environment to control the vibrations generated by the helicopter rotor and imparted thereby to the helicopter fuselage, it will be evident to those skilled in the art that it can be utilized in any fixed vibration prone system as a fixed vibration absorber operative to coact with the system principal vibration excitation source, as a function of the vibrations generated by the principal source, to reduce system vibration.

Further, while the preferred embodiment of the invention is directed to a fixed vibration absorber of the pendular-type with provisions for absorber natural frequency variation, it should be noted that the fixed bifilar vibration absorbers provides substantial advantages over prior art fixed vibration absorbers, even when used without the natural frequency variation capability, because the vibration absorber so used as a fixed natural frequency absorber will still have the inherent advantages of a bifilar-type system, namely its low inherent damping, lightweight, minimum space envelope, high reliability and minimum maintenance.

Viewing Fig. 12, we see vibration absorber 10 as a fixed frequency vibration absorber. When used as a fixed frequency vibration absorber as shown in Fig. 12, the absorber construction will be precisely as shown in Figs. 5—8 in the preferred embodiment except that actuator 32 will be removed and preferably replaced by a spring retainer 60, which is preferably identical with retainer 28 but positioned at the opposite end of spring 18 therefrom and acting against mass member 12. With the removal of actuator 32, the actuator control mechanism 47 shown in Figs. 5 and 10 is also eliminated. By viewing Fig. 12 it will be noted that the fixed frequency vibration absorber 10 includes mass members 11 and 12 supported by the same pendular-type connections shown in Figs. 5—8 from base member 20 and with spring or springs 18 applying a force thereto tending to separate the mass means 10 and 12. The natural frequency of the Fig. 12 fixed frequency vibration absorber is determined by the mass of mass means 11 and 12 and the spring preload and spring rate of spring or springs 18. As in the Figs. 5—8 variable frequency absorber, the Fig. 12 fixed frequency absorber is also linear in the same fashion.

It may be desired to modify the Fig. 12 fixed frequency modification as shown in Figs. 13 or 14 to permit a degree of adjustment in establishing the preload force exerted by spring 18 and hence the natural frequency of absorber 10 prior to or after its installation either as a subassembly or after installation in the substructure requiring vibration suppression but not during operation. Viewing Fig. 13 we see a cross-sectional showing of spacer member 62 comprising inner and outer continuous and threaded ring members 64 and 66 in threaded engagement with one another so that the ring members 64 and 66 may be rotated manually relative to one another through the space shown in Fig. 12 between mass members 11 and 12 thereby varying the width or spacing dimension of variable spacer 62 to vary the force exerted by spring 18 on members 11 and 12. Spring 18 may be of one or two-piece construction. Viewing Fig. 14 we see spacer ring 68, shown in partial cross-section, between one or two-piece spring 18 to serve as a spacer ring therebetween to vary the force exerted by the combination of spacer 68 and spring or springs 18 on masses 11 and 12. Spacer 68 is preferably of two or more piece, segmented construction so as to be manually positionable through the area shown in Fig. 12 between members 11 and 12 and joined by conventional connecting means to form a continuous spacer ring 68 as illustrated. Of course, for fixed frequency operation actuator 32 could be used but adjusted to a fixed position to preload springs 18 to establish a fixed natural frequency for absorber 10. To provide a better understanding of the operation of the vibration absorber, the design steps and considerations taken into account in optimizing the design will now be discussed. We first determined the useful motion which would be required and which is available in our pendular-type vibration absorber by estimating the impedance of the structure to be suppressed, such as helicopter fuselage, and considering both the location of the vibration absorber in the helicopter and the locations in the fuselage where vibrations are to be controlled, such as the cockpit or various cabin locations, one can determine the absorber dynamic mass required to reduce the fuselage to the desired vibration level. Knowing this and the frequency of operation of the vibration absorber dynamic masses, which, for example, happens to be four (4) times rotor RPM for a four bladed rotor, the required absorber dynamic masses displacement operating travel, which is the absorber useful amplitude, can be established.

Having determined this useful motion or useful amplitude of our pendular-type vibration absorber, one can then determine the pendular length necessary to achieve maximum mass member desired angular displacement which we chose to be ±45°. This was done by utilizing the equation:

$$\theta = \sin^{-1} \frac{X}{a}$$

where:

$\theta$=angular displacement of the mass member relative to the base member.

X=useful amplitude or motion, and

a=the pendular lengths and is equal to D—d, where D is the bushing diameter of the base member and mass members apertures, and d is the pin diameter.

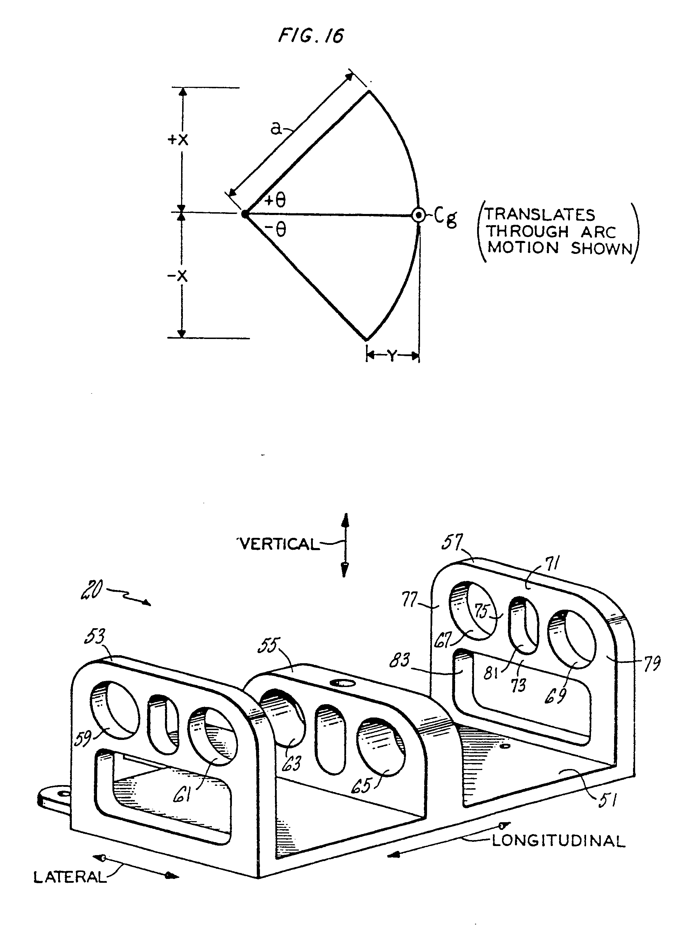

The significance of what has been done to this point can best be realized by viewing Fig. 16 which shows the pendular arc through which each part of each mass member moves relative to the base member. In Fig. 16, the mass c.g. is illustrated as having an angular displacement of $+\theta$ through $-\theta$ on opposite sides of its illustrated neutral position, and with pendular length being "a", where a=D—d. This arcuate, translational pendular motion illustrated in Fig. 16 shows mass member amplitude, which is +X and —X, i.e. 2x total amplitude, and also shows mass member motion "Y", which determines the amount of compression of the spring members. It is important to note that the springs are defected or cycled twice for each full cycle of "X" motion of the mass members. In this connection, it will be noted that when the mass member starts its downward motion from its +X position, which is also its full angular motion $+\theta$ position, the spring is maximally compressed the full distance Y and that the spring is also maximally compressed the full distance Y when the mass concludes its downward motion at position —X, which is also its full angular motion $-\theta$ position. This is the characteristic of our pendular-type vibration absorber which produces the internal force being imposed by the spring members on the mass members as the mass moves through its arcuate motion, and hence the non-variant natural frequency of the vibration absorber. While it is an inherent disadvantage in a pendular construction that it becomes more non-linear as the angular displacement of the absorber mass members increase, this is overcome in our construction in that the spring is compressed its greatest at the points of maximum angular displacement to thereby maximize the internal force exerted by the springs on the mass members at that point, and thereby retain a first order linearity so that the natural frequency of the absorber is non-variant with angular displacement. Maintaining linearity is important to maintaining high absorber amplification so that small dynamic masses can be operated at large useful amplitudes to obtain the necessary inertial reaction forces to suppress aircraft vibration.

A vibration system, such as this vibration absorber, can be described in terms of its effective mass and its effective spring rate ($K_x$). Since the effective mass has already been established, we determined the effective spring rate, or programmed rate in the case of a variable tuned absorber, necessary to achieve the desired absorber natural frequency or frequencies. This procedure is fully outlined in Den Hartog's work on "Mechanical Vibrations".

The internal steady load requirement for the absorber can be arrived at by the formula:

$$F_{nr}=(K_x) \, (a)$$

Where:

$F_{nr}$=the internal steady load between the absorber masses for the various rotor speeds.

$K_x$=the effective spring rate, and a is the length of the pendular arm, i.e., D—d.

Now this steady load, or loads, $F_{nr}$ is achieved by placing a spring between the mass member spring retainers having compressed the spring into position so that its internal loads will satisfy the requirement to establish the systems natural frequency(ies) in proper relation to the aircraft's impedance and excitation frequencies. This force $F_{nr}$ is comparable to the centrifugal force for an absorber installed in a rotating system.

The derived equations of motion will show that there is a preferred spring rate to maintain the absorber's linearity, and that this spring rate is dependent upon the internal load, $F_{nr}$, the pendular length, a, and the angular displacement $\theta$. The following equation expresses this relationship:

$$K_s=F_{nr}/a \left[ \frac{(1-\dfrac{\sin \theta}{\theta}) \quad (\dfrac{\theta}{2 \sin \theta})}{(1-\cos \theta)} \right]$$

Where:

$K_s$=the preferred spring rate of the physical spring. By considering normal operating conditions, typical values of $F_{nr}$ and $\theta$ can be chosen to select the desired spring rate $K_s$. This linearization is comparable to incorporating the cycloidal bushing taught in a U.S. patent 4 218 187.

Using conventional methods, the steady and vibratory loads of the spring can be determined from previous data selected or established.

Then, using spring stress allowables, both steady and vibratory, the various spring designs available can be calculated using conventional approaches. Of the springs so selected, each must be checked with respect to static stability of the physical spring when placed between the spring retainers of the mass means under the load conditions imposed. Again, conventional approaches can be used to establish the permissible relationships for the compression coil spring which was chosen, for example, between the spring free length, compressed length, and mean diameter of the particular type of spring end constraints chosen. It is important to achieve the spring design with static stability without the need of guides, since such guides are likely to result in points of contact and introduce sliding friction which will increase the absorber's damping and reduce its performance. This basic spring technology is well known and fully explained in A. M. Wahl's book entitled "Mechanical Springs".

The transverse and axial installed spring natural frequencies for the springs under consideration must be checked out to determine that neither is close to the excitation frequencies of other absorber elements so as to avoid resonance therebetween, which could bring about metal-to-metal contact and cause fretting or introduce friction damping. The final relative motions determined for the selected spring then determine the clearances between vibration absorber components, for example, the radial clearance between the springs and the dynamic masses.

Since the connecting pins of the pendular-type connection will only contact the aperture bushings when the pins are subjected to compressive loading, it is necessary to determine all of their instantaneous applied loads from the spring and the inertia loads of all the moving masses, and then it is necessary to place the pins and bushings in such locations that their reaction forces maintain compressive loads on the pins at all times. This occurs when the combined applied force of the spring and the mass members inertia loads have a resultant vector with a line of action which at all times extends between two sets of overlapping apertures and pins, to thereby assure both pitch and yaw stability, particularly pitch, see Fig. 8, of the mass members relative to the base member. It will further be seen that spreading the sets of pins/aperture bushings results in positive stability. Also, locating the dynamic mass c.g. close to the pins/aperture bushings results in positive stability by minimizing vertical pitch coupling.

Pin inertia must be kept sufficiently low so that the pins do not skid under rotational accelerated loading which is characteristic of vibratory motion. Positive reaction capability is determined by determining the pin instantaneous loading and its coefficient of friction with respect to the bushing. This absorber was determined to have no problems in this regard and therefor one-piece, solid pin members were used.

Knowing the maximum pin/aperture bushing applied loads, from above, the pin and bushing diameters, and using applicable stress allowables and modulus of selected materials, the widths of the pins and aperture bushings can be established by conventional means.

We wish it to be understood that we do not desire to be limited to the exact details of construction shown and described, for obvious modifications will occur to a person skilled in the art.

## Claims

1. A vibration absorber adapted to be fixedly attached to a vibration-prone system to cooperate with the principal vibration excitation source which primarily generated vibrations in a given direction so as to control system vibrations and comprising a base means (20) and a selected mass means (11) connected by pendular connecting means (a) to the base means for support therefrom, characterized by a further selected mass means (12) of equal mass connected by a further pendular connecting means (a) to said base member for support therefrom, the two mass means (11, 12) being mounted on said base means for mirror-image pendular motion, and by spring means (18) operatively connected between said mass means in preloaded condition to exert a force on said mass means to thereby establish the natural frequency thereof and of the vibration absorber, and to also cause said mass means to move in coincident, mirror-image pendular motion so that motion of said mass means produces additive forces in said given direction to absorb the vibration force established by said principal source, and so that all other forces not acting in the given direction mutually cancel.

2. A vibration absorber according to claim 1, characterized by control means (47) responsive to the frequency of the vibrations generated by the principal vibration excitation source and operatively connected to said spring means (18) to vary the force exerted thereby natural frequency of said mass means (11, 12) as a function of the vibration frequency generated by said excitation source to thereby maintain the proper relationship between the mass means natural frequency and the principal source generated frequency to control system vibration.

3. A vibration absorber according to claim 1, characterized in that said pendular connecting means (a) comprises three pendular connections (51, 52, 53) between said base means (20) and each mass means (11, 12), which connections are spaced in two substantially perpendicular directions to provide stability in the support of the mass means from the base means.

4. A vibration absorber according to claim 3, characterized in that said three pendular connections (51, 52, 53) are located at the apices of a triangle to provide two directional geometric stability to each of the mass means (11, 12) from the base means (20).

5. A vibration absorber according to claim 3 or 4, characterized in that each of said pendular connections (51, 52, 53) comprises overlapping apertures (22, 24) of selected diameters in said base means (20) and said mass means (11, 12), and a pin member (26) of selected diameter extending through the overlapping apertures thereby joining the mass means to the base means for pendular motion with respect thereto.

6. A vibration absorber according to any one of claims 1 to 5, characterized in that at least one spacer member (62) is positioned in series with said spring means (18) between said mass means (11, 12) cooperating with said spring means to exert a combined force on said mass means.

7. A vibration absorber according to claim 6, characterized in that said spring means (18) exerts a force to separate said two mass means (11, 12) or to move said two mass means closer together.

8. A vibration absorber according to claim 1, characterized in that an actuator (32) is positioned in series with said spring means (18) between said two mass means (11, 12) and operable to vary the spring deflection of said spring means and hence the force exerted thereby against said two mass means to thereby vary the natural frequency of the two mass means and the vibration absorber.

9. A vibration absorber according to claim 8, characterized in that said actuator (32) is a hydraulic actuator comprising cylinder-piston means having a fixed member (36) and a movable member (34), with the movable member supported to be movable in response to fluid pressure to move said movable member to thereby vary the spring deflection and therefor the force exerted by said spring means (18) on said two mass means (11, 12), and hence the natural frequency of the two mass means and the vibration absorber.

10. A vibration absorber according to claim 2, characterized in that said control means (47) includes a controller (44) programmed to provide hydrualic actuating fluid to said actuator (32) at a pressure proportional to the vibration frequency being generated by the system principal vibration excitation force, and having position feedback means providing an actuator movable member position signal to said controller.

11. A vibration absorber according to claim 10, characterized in that said controller (44) is programmed to provide hydraulic fluid to said actuator (32) at a pressure proportional to the square of the frequency of the system principal vibration excitation force.

12. A vibration absorber according to claim 9, characterized in that said cylinder-piston means comprises telescoping sleeve members (34, 36).

13. A vibration absorber according to claim 5, characterized in that the base means (20) comprises a one-piece base member having a flat platform (51) extending longitudinally thereof and adapted to be fixedly attached to the vibration prone system, and further having three parallel plate members (53, 55, 57) extending laterally thereof and perpendicularly from said platform, and wherein the centrally positioned plate member (55) is of substantially different height than the two end plate members (53, 57) which are of equal height, each of said plate members having two equally laterally spaced, equal diameter apertures (59, 61, 63, 65, 67, 69) extending therethrough so that the aperture axes are perpendicular to the plate members and with the apertures (59, 61, 67, 69) in the end plate members being of identical height above the platform and with the apertures (63, 65) in the middle plate member being of considerably different height to the platform but of equal height thereabove so that the apertures form two laterally spaced, parallel sets of three apertures, with the apertures in each set having parallel axes which are also parallel to but equidistant laterally spaced from the parallel axes in the other set of apertures, and so that the apertures in each set define the corners of a triangle so as to be offset in two perpendicular coplanar directions, and so that the apertures in each plate member are positioned in a I-shaped portion of the plate member including two parallel beams (71, 73) passing above and below the apertures and a support web (75) between the apertures, that the two mass means (11, 12) are two identical mass members extending longitudinally along and positioned on opposite lateral sides of said base member and shaped to define plate members (21, 23, 25, 27, 29, 31) extending parallel to and positioned with selective longitudinal spacing on opposite sides of each of said base member plate members (53, 55, 57) so that each mass member defines three longitudinally spaced sets of longitudinally spaced plate members and with each mass member set of plate members positioned on opposite sides of a base member plate member and with selected longitudinal spacing therebetween, the mass member plate members including apertures (33, 35, 37, 39, 41, 43) of selected diameter equal to the platform plate member apertures diameter and having axes parallel to the axes of the base member plate member apertures which they overlap, and with the apertures of each set of said mass member plate members being coaxial, and that a pin member (71, 73, 75) extends through each of the six sets of overlapping apertures defined by said platform plate members apertures and said mass means plate member apertures so as to define a trifiliar, pendular connection between each of said mass members and said base member so as to support each mass member in suspension from said base member for pendular motion in an arc parallel to said base member plate members due to the trifiliar pendular connection between said pin members and said overlapping aperture sets.

14. A vibration absorber according to claim 13, characterized in that said end plate members (53, 57) and their apertures (59, 61, 67, 69) of the base member (20) are higher from said platform (51) than the center plate member (55) and its apertures (63, 65).

15. A vibration absorber according to claim 13, characterized in that each pin member (71, 73, 75) is of one piece, solid construction and shaped to have cylindrical sections extending through the plate member apertures of the base member (20) and the mass member (11, 12) which it joins, and further having circumferential flanges (83, 85) integral therewith and positioned in the longitudinal spaces between the base member plate member aperture and the mass member plate member apertures through which the pin member extends, which flanges are tapered radially outwardly so as to reduce the amount of friction contact between the mass members and the base member during pendular motion.

16. A vibration absorber according to claim 13, characterized in that the spring means (18) comprises two parallel coil spring members extending laterally between said mass members (11, 12) transversely to said given direction and having ends ground perpendicular to the spring member axis, and further including spring end retainers (28, 30) supported in said mass members to receive the ground end of said coil springs, and that said coil spring members are of selected length to be in selected compression throughout all modes of operation of the vibration absorber.

17. A vibration absorber according to claim 16, characterized in that said spring members (18) are of selected length, diameter and stiffness to be statically stable under all operating conditions.

18. A vibration absorber according to claim 16, characterized in that the transverse and axial natural frequencies of said coil spring members (18) are selected so that each coil spring member is detuned from anticipated system vibrations to avoid resonance therebetween.

19. A vibration absorber according to claim 18, characterized in that the spring compression of said coil spring members and the mass of said mass members are selected, and that each trifilar, pendular connection (51, 52, 53) between said mass members (11, 12) and said base member (20) are positioned so that the line of the combined applied force of the spring members (18) and the inertia loads acting on said mass members is always positioned between two of the trifilar connections between one of said mass members and said base member so that the pin members (71, 73, 75) are always under compression loading in the apertures to provide geometric stability to the mass members during their full range of pendular operation with respect to said base member.

20. A vibration absorber according to any one of claims 13 to 19, characterized in that a low friction bushing is positioned in each of said base member (20) and said mass members apertures.

21. A vibration absorber according to any one of claims 13 to 20, characterized in that said base member plate members (53, 55, 57) are approximately twice the thickness of said mass members plate members (21, 23, 25, 27, 29, 31).

22. A vibration absorber according to any one of claims 13 to 21, characterized in that positive stops (99) of soft material are selectively sized and positioned on said mass members (11, 12) to limit the motion thereof and prevent metal-to-metal contact between vibration absorber parts.

23. Use of the vibration absorber according to any one of claims 1 to 22 in a helicopter having a fuselage and a lift rotor constituting the principal fuselage vibration excitation source, wherein the vibration absorber is fixedly attached to the fuselage to control fuselage vibration.

24. Use according to claim 23, characterized by control means (47) responsive to rotor RPM to vary the spring force exerted on said mass means (11, 12) and thereby the natural frequency of said vibration absorber as a function of rotor RPM, to thereby maintain the proper relationship between the vibration absorber natural frequency and the rotor RPM generated frequency.

**Patentansprüche**

1. Vibrationsdämpfer, der mit einem zum Schwingen neigenden System fest zu verbinden ist zur Zusammenwirkung mit der Hauptschwingungserregerquelle, die hauptsächlich Vibrationen in einer vorbestimmten Richtung erzeugt, um die Systemvibrationen zu dämpfen, mit einer Tragvorrichtung (20) und einer vorbestimmten Masse (11), die über eine Pendelverbindung (a) mit der Tragvorrichtung zur Aufhängung der Masse an derselben verbunden ist, gekennzeichnet durch eine weitere vorbestimmte Masse (12) von gleichem Gewicht, die über eine weitere Pendelverbindung (a) mit der Tragvorrichtung zur Aufhängung der weiteren Masse an derselben verbunden ist, wobei die beiden Massen (11, 12) an der Tragvorrichtung aufgehängt sind für spiegelbildliche Pendelbewegung, und durch Federmittel (18), die unter Vorbelastung zwischen den Massen angeordnet sind, zur Ausübung einer Kraft auf die Massen, um die Eigenfrequenz der Massen und des Vibrationsdämpfers festzulegen und den Massen eine gleichzeitige, spiegelbildliche Pendelbewegung zu verleihen, damit durch die Bewegung der Massen sich addierende Kräfte in der erwähnten vorbestimmten Richtung zur Dämpfung der durch die Hauptquelle hervorgerufenen Vibrationskräften erzeugt werden und damit alle anderen Kräfte, welche nicht in der vorbestimmten Richtung wirken sich gegenseitig aufheben.

2. Vibrationsdämpfer nach Anspruch 1, gekennzeichnet durch eine auf die Frequenz der durch die Haupterregerquelle erzeugten Vibrationen ansprechende Regelvorrichtung (47), welche wirksam an die Federmittel (18) angeschlossen ist, zur Veränderung der durch die Federmittel ausgeübten Kraft und damit der Eigenfrequenz der Massen (11, 12) in Abhängigkeit der durch die Erregerquelle erzeugten Vibration, damit der erwünschte Zusammenhang zwischen der Eigenfrequenz der Massen und der durch die Hauptquelle erzeugten Vibrationen zur Dämpfung der Systemvibrationen beibehalten wird.

3. Vibrationsdämpfer nach Anspruch 1, dadurch gekennzeichnet, dass die Pendelverbindungen (a) jeweils drei Pendellagerungen (51, 52, 53) zwischen der Tragvorrichtung (20) und jeder Masse (11, 12) aufweisen, welche Pendellagerungen in zwei im wesentlichen senkrecht zeuinander stehenden Richtungen in Abstand voneinander angeordnet sind, um eine stabile Aufhängung der Massen an der Tragvorrichtung zu gewährleisten.

4. Vibrationsdämpfer nach Anspruch 3, dadurch gekennzeichnet, dass die drei Pendellagerungen (51, 52, 53) an den Spitzen eines Dreiecks angeordnet sind, um eine geometrische Stabilität in zwei Richtungen für jede der an der Tragvorrichtung (20) aufgehängten Massen (11, 12) zu erreichen.

5. Vibrationsdämpfer nach Anspruch 3 oder 4, dadurch gekennzeichnet, dass jede der Pendellagerungen (51, 52, 53) sich überlappende Öffnungen (22, 24) mit vorbestimmten Durchmessern in der Tragvorrichtung (20) und in den Massen (11, 12) aufweist, und desweiteren mit einem Stift (26) vorbestimmten Durchmessers versehen ist, der durch die sich überlappenden Öffnungen ragt und somit die Massen mit der Tragvorrichtung für Pendelbewegung in bezug auf dieselbe verbindet.

6. Vibrationsdämpfer nach einem der Ansprüche 1 bis 5, dadurch gekennzeichnet, dass wenigstens ein Abstandshalter (62) in Serie mit den Federmittel (18) zwischen den Massen (11, 12) angeordnet ist, und zusammen mit dem Federmittel eine gemeinsame Kraft auf die Massen ausübt.

7. Vibrationsdämpfer nach Anspruch 6, dadurch gekennzeichnet, dass die Federmittel (18) eine Kraft auf die Massen (11, 12) ausüben, um dieselben voneinander weg oder aufeinander zu zu bewegen.

8. Vibrationsdämpfer nach Anspruch 1, dadurch gekennzeichnet, dass eine Betätigungsvorrichtung (32) in Serie mit den Federmittel (18) zwischen den beiden Massen (11, 12) angeordnet und wirksam ist zur Veränderung der Vorspannung der Federmittel und damit der durch diese Federmittel auf die beiden Massen ausgeübten Kraft, um die Eigenfrequenz der beiden Massen und des Vibrationsdämpfers zu verändern.

9. Vibrationsdämpfer nach Anspruch 8, dadurch gekennzeichnet, dass die Betätigungsvorrichtung (32) einen Hydraulikbetätiger mit einer Zylinderkolbeneinrichtung aufweist, die mit einem festen Glied (36) und einem beweglichen Glied (34) versehen ist, wobei das bewegliche Glied gelagert ist zur Bewegung in Anhängigkeit eines Fluiddruckes, um das bewegliche Glied zu verstellen und somit die Federvorspannung und dementsprechend die durch die Federmittel (18) auf die beiden Massen (11, 12) ausgeübte Kraft zu verändern, zwecks Veränderung der Eigenfrequenz der beiden Massen und des Vibrationsdämpfers.

10. Vibrationsdämpfer nach Anspruch 2, dadurch gekennzeichnet, dass die Regelvorrichtung (47) einen Regler (44) aufweist, der programmiert ist, um der Betätigungsvorrichtung (32) Hydraulikfluid zuzuführen mit einem Druck der proportional zu der durch die Haupterregerkraft erzeugten Systemvibration ist, und dass die Regelvorrichtung mit Rückführmittel versehen ist, um dem Regler ein der Stellung des beweglichen Gliedes der Betätigungsvorrichtung entsprechendes Signal zuzuführen.

11. Vibrationsdämpfer nach Anspruch 10, dadurch gekennzeichnet, dass der Regler (44) programmiert ist, um der Betätigungsvorrichtung (32) Hydraulikfluid unter einem Druck zuzuführen der proportional ist zu dem Quadrat der Frequenz der durch die Haupterregerkraft erzeugten Systemvibration.

12. Vibrationsdämpfer nach Anspruch 9, dadurch gekennzeichnet, dass die Zylinder-Kolbeneinrichtung teleskopische Hülsen (34, 36) aufweist.

13. Vibrationsdämpfer nach Anspruch 5, dadurch gekennzeichnet, dass die Tragvorrichtung (20) eine einteilige Grundplatte aufweist, die durch eine flache Plattform (31) gebildet ist, die in Längsrichtung des Trägers verläuft und mit dem zum Schwingen neigenden System fest zu verbinden ist, wobie diese flache Plattform drei parallele Platen (53, 55, 57) aufweist, die sich in Querrichtung derselben erstrecken und senkrecht zur Plattform stehen, und wobei die mittlere Platte (55) eine zu den Endplatten (53, 57) wesentlich unterschiedliche Höhe aufweist, welche Endplatten ihrerseits eine gleiche Höhe haben, wobei jede dieser Platten mit zwei Öffnungen (59, 61, 63, 65, 67, 69) gleichen Durchmessers versehen ist, die sich in gleichem seitlichen Abstand voneinander befinden, und durch die jeweilige Platte ragen, wobei die Mittellinien der Öffnungen senkrecht zu den Platten stehen, und die Öffnungen (59, 61, 67, 69) in den Endplatten sich in gleicher Höhe über der Plattform befinden, während die Öffnungen (63, 65) in der mittleren Platte sich in einer dazu sehr unterschiedlichen Höhe, jedoch untereinander gleichen Höhe, über der Plattform befinden, wobei die Öffnungen zwei in Querabstand voneinander angeordnete, parallele Reihen von jeweils drei Öffnungen bilden, wobei die Öffnungen einer jeden Gruppe parallele Mittellinien aufweisen, die ebenfalls parallel zu den parallelen Mitellinien der anderen Öffnungsgruppe, jedoch in gleichem Querabstand von denselben angeordnet sind, und die Öffnungen einer Jeden Gruppe die Ecken eines Dreieckes bilden, und somit in zwei senkrecht aufeinander stehenden Richtungen in einer Ebene voneinander versetzt sind, und wobei die Öffnungen einer jeden Platte sich in einem I-förmigen Teil der Platte befindet, welcherzwei parallele Traversen (71, 73) aufweist, die oberhalb und unterhalb der öffnungen angeordnet sind sowie mit einem Tragsteg (75) zwischen den Öffnungen versehen ist, dass die beiden Massen (11, 12) zwei identische Massen sind, die sich in Längsrichtung der Tragvorrichtung erstrecken, und auf gegenüberliegenden Seiten derselben angeordnet sind, wobei diese Massen mit Platten (21, 23, 25, 27, 29, 31) versehen sind, die parallel zu den Platten (53, 55, 57) der Tragvorrichtung angeordnet sind und mit vorbestimmtem Längsabstand zu diesen auf den gegenüberliegenden Seiten derselben liegen, wobei jede Masse drei in Längsrichtung in Abstand voneinander angeordnete Gruppen von in Längsrichtung in Abstand voneinander angeorneten Platten aufweist, und wobei die Platte einer jeden Plattengruppe der beiden Massen sich auf gegenüberliegenden Seiten einer Platte der Tragvorrichtung befindet, und in vorbestimmtem Längsabstand zu dieser angeordnet sind, wobei die Platten der beiden Massenöffnungen (33, 35, 37, 39, 41, 43) mit vorbestimmtem gleichen Durchmesser aufweisen, der dem Durchmesser der Öffnungen in den Platten der Tragvorrichtung entsricht und wobei die Mittellinien dieser Öffnungen parallel zu den Mittellinien der Öffnungen in den Platten der Tragvorrichtung sind, welche Öffnungen sie überlappen, und die Öffnungen einer jeden Gruppe der Platten der beiden Massen koaxial zueinander sind, und dass jeweils ein Stift (71, 73, 75) durch jede der sechs Gruppen der sich überlappenden Öffnungen ragt, welche durch die Öffnungen in den Platten der Tragvorrichtung und in denjenigen der Massen gebildet sind, um eine trifilare Pendelaufhängung zwischen einer jeden Masse und der Tragvorrichtung zu bilden, und somit jede Masse an der Tragvorrichtung für eine Pendelbewegung längs einem zu den Platten der Tragvorrichtung parallelen Bogenwinkel aufzuhängen infolge der trifilaren Pendelaufhängung zwischen den Stiften und den sich überlappenden Öffnungsgruppen.

14. Vibrationsdämpfer nach Anspruch 13, dadurch gekennzeichnet, dass die Endplatten (53, 57) mit ihren Öffnungen (59, 61, 67, 69) der Tragvorrichtung (20) sich in einer grösseren Höhe über der Plattform (51) als die mittlere Platte (55) mit ihren Öffnungen (63, 65) befinden.

15. Vibrationsdämpfer nach Anspruch 13, dadurch gekennzeichnet, dass jeder Stift (71, 73, 75) aus einem einzigen, massiven Teil mit zylindrischen Abschnitten besteht, welche sich durch die Öffnungen in den Platten der Tragvorrichtung (20) und der Masse (11, 12) erstrecken, welche durch gen jeweiligen Stift aufgehängt ist, und wobei der Stift mit angeformten Umfangsflanschen (83, 85) versehen ist, die in den Längsabständen zwischen den Öffnungen in den Platten der Tragvorrichtung und in denjenigen der Masse liegen, durch welche der Stift sich hindurch erstreckt, wobei diese Flansche radial nach aussen verjüngt sind zur Herabsetzung des Reibungswiderstandes zwischen den Massen und der Tragvorrichtung während der Pendelbewegung.

16. Vibrationsdämpfer nach Anspruch 13, dadurch gekennzeichnet, dass die Federmittel (18) zwei parallele Schraubenfedern aufweisen, welche in Querrichtung zwischen den Massen (11, 12) quer zu der erwähnten vorbestimmten Richtung angeordnet sind und deren Enden senkrecht zu den Federmitellinien geschliffen sind, und dass an den Massen Federendhalter (28, 30) vorgesehen sind zur Aufnahme der geschliffenen Enden der Schraubenfedern, und dass Die Schraubenfedern eine vorbestimmte Länge aufweisen und während sämtlichen Betriebsbedingungen des Vibrationsdämpfers sich unter einem Vorbestimmten Vorspanndruck befinden.

17. Vibrationsdämpfer nach Anspruch 16, dadurch gekennzeichnet, dass die Federn (18) eine vorbestimmte Länge, Durchmesser und Steifheit aufweisen, damit sie unter allen Betriebsbedingungen statisch stabil sind.

18. Vibrationsdämpfer nach Anspruch 16, dadurch gekennzeichnet, dass die Quer-und Axialeigenfrequenzen der Schraubenfedern (18) ausgewählt sind damit jede Schraubenfeder zur Vermeidung einer Resonanzwirkung von der zu erwartenden Systemvibration entstimmt ist.

19. Vibrationsdämpfer nach Anspruch 18, dadurch gekennzeichnet, dass die Kompression der Schraubenfedern und das Gewicht der Massen vorbestimmt sind, und dass jede trifilare Pendelverbindung (51, 52, 53) zwischen den Massen (11, 12) und der Tragvorrichtung (20) angeordnet ist damit die Wirkungslinie der an den Massen angreifenden Gesamtkraft der Federn (18) und der Trägheitskräfte immer zwischen zwei der trifilaren Pendellagerungen zwischen einer der beiden Massen und der Tragvorrichtungen liegt, und die Stifte (71, 73, 75) immer unter Kompressionsbelastung in den Öffnungen sind um eine geometrische Stabilität der Massen während ihrer gesamten Pendelbewegung in bezug auf die Tragvorrichtung zu erreichen.

20. Vibrationsdämpfer nach einem der Ansprüche 13 bis 19, dadurch gekennzeichnet, dass jede Öffnung der Tragvorrichtung (20) und der Massen mit jeweils einer Buchse mit geringem Reibungswiderstand versehen ist.

21. Vibrationsdämpfer nach einem der Ansprüche 13 bis 20 dadurch gekennzeichent, das die Platten (53, 55, 57) der Tragvorrichtung etwa doppelt so dick als die Platten (21, 23, 25, 27, 29, 31) der Massen sind.

22. Vibrationsdämpfer nach einem der Ansprüche 13 bis 21, dadurch gekennzeichnet, dass Anschläge (99) aus weichem Material und mit vorbestimmter Abmessung an den Massen (11, 12) angeordnet sind, um ihre Bewegung zu begrenzen und um eine metallische Berührung mit anderen Vibrationsdämpferbauteilen zu verhindern.

23. Verwendung des Vibrationsdämpfers nach einem der Ansprüche 1 bis 22 in einem Hubschrauber mit einem Rumpf und einem Haupterotor, der die Haupterregerquelle der Rumpfvibration bildet, wobei der Vibrationsdämpfer zur Dämpfung der Rumpfschwingung fest mid dem Rumpf verbunden ist.

24. Verwendung nach Anspruch 23 gekennzeichnet durch eine auf die Rotordrehzahl ansprechende Regeleinrichtung (47) zur Veränderung der auf die Massen (11, 12) wirkenden Federkraft, um somit die Eigenfrequenz des Vibrationsdämpfers in Abhängigkeit der Rotordrehzahl zu verändern, damit der richtige Zusammenhang zwischen der Eigenfrequenz des Vibrationsdämpfers und der Frequenz der durch die Rotordrehzahl erzeugten Schwingung aufrecht erhalten wird.

**Revendications**

1. Absorbeur de vibrations destiné d'être fixement attaché à un système enclin à vibrer pour coopérer avec la source principale d'excitation de vibrations qui produit principalement des vibrations dans une direction prédéterminée afin de contrôler les vibrations du système et comportant un moyen de base (20) et un moyen de masselotte sélectionné (11) connecté par un moyen de connexion pendulaire (a) au moyen de base pour le supporter par celui-ci, caractérisé par un autre moyen de masselotte sélectionnée (12) à masse égale relié par un autre moyen de connexion pendulaire (a) au moyen de base pour le supporter par celui-ci, les deux moyens de masselotte (11, 12) étant montés sur le moyen de base pour mouvement pendulaire symétrique, et par un moyen de ressort (18) relié opérativement entre ces moyens de masselotte à l'état préchargé pour exercer une force entre ces moyens de masselotte pour ainsi établir leur fréquence propre et celle de l'absorbeur de vibrations, et aussi pour faire mouvoir les moyens de masselottes en mouvement pendulaire coïncident symétrique de sorte que le mouvement de ces moyens de masselotte produise des forces addities dans ladite direction prédéterminée pour absorber la force vibratoire établie par ladite source principale, et de sorte que toutes les autres forces n'agissant pas dans la direction prédéterminée s'annulent mutuellement.

2. Absorbeur de vibrations selon la revendication 1, caractérisé par un moyen de contrôle (47) fonctionnant en réponse à la fréquence des vibrations produites par la source principale d'exitation de vibration et relié de façon opérationnelle audit moyen de ressort (18) pour varier la force appliquée par ce moyen de ressort et en conséquence la fréquence propre des moyens de masselotte (11, 12) en fonction de la fréquence des vibrations produites par ladite source d'excitation afin de maintenir la relation appropriée entre la fréquence propre des moyens de masselotte et la fréquence produite par la source principale pour contrôler les vibrations du système.

3. Absorbeur de vibrations selon la revendication 1, caractérisé en ce que chaque moyen de connexion pendulaire (a) comporte trois connexions pendulaires (51, 52, 53) prévues entre le moyen de base (20) et chaque moyen de masselotte (11, 12), ces connexions étant espacées en deux directions substantiellement perpendiculaires pour fournir un support stable des moyens de masselotte par le moyen de base.

4. Absorbeur de vibrations selon la revendication 3, caractérisé en cen que les trois connexions pendulaires (51, 52, 53) sont situées aux sommets d'un triangle pour fournir une stabilité géométrique en deux directions pour chacun des moyens de masselotte (11, 12) portés par le moyen de base (20).

5. Absorbeur de vibrations selon la revendication 3 ou 4, caractérisé en ce que chaque connexion pendulaire (51, 52, 53) comporte des ouvertures chevauchantes (22, 24) à diamètres choisis pratiquées dans le moyen de base (20) et le moyen de masselotte (11, 12) et une goupille (26) à diamètre choisi s'étendant à travers ces ouvertures chevauchantes pour ainsi relier les moyens de masselotte au moyen de base pour mouvement pendulaire par rapport à celui-ci.

6. Absorbeur de vibrations selon l'une quelconque des revendications 1 à 5, caractérisé en ce qu'au moins un élément d'espacement (62) est placé en série avec ledit moyen de ressort (18) entre lesdits moyens de masselotte (11, 12) coopérant avec ledit moyen de ressort pour exercer une force combinée contre lesdits moyens de masselotte.

7. Absorbeur de vibrations selon la revendication 6, caractérisé en ce que ledit moyen de ressort (18) exerce une force pour séparer les deux moyens de masselotte (11, 12) ou pour rapprocher les deux moyens de masselotte l'un de l'autre.

8. Absorbeur de vibrations selon la revendication 1, caractérisé en ce qu'un dispositif de commande (32) est disposé en série avec ledit moyen de ressort (18) entre les deux moyens de masselotte (11, 12) et ce dispositif de commande fonctionnant pour varier le fléchissement dudit moyen de ressort et en conséquence la force appliquée par ce moyen de ressort auxdits moyens de masselotte pour ainsi changer la fréquence propre des deux moyens de masselotte et de l'absorbeur de vibrations.

9. Absorbeur de vibrations selon la revendication 8, caractérisé en ce que ledit moyen de commande (32) est un moyen de commande hydraulique comportant un moyen à cylindre et piston ayant un élément fixe (36) et un élément mobile (34), l'élément mobile étant supporté pour être mobile en réponse à un fluide sous pression pour mouvoir l'élément mobile pour ainsi changer le fléchissement dudit moyen de ressort et en conséquence la force appliquée par ledit moyen de ressort (18) auxdits moyens de masselotte (11, 12) et en conséquence la fréquence propre des deux moyens de masselotte et de l'absorbeur de vibrations.

10. Absorbeur de vibrations selon la revendication 2, caractérisé en ce que ledit moyen de contrôle (47) comporte un contrôleur (44) programmé pour alimenter du fluide de commande hydraulique vers ledit moyen de commande (32) sous une pression proportionnelle à la fréquence de vibration produite par la force d'exitation de vibrations du système principal et ayant des moyens de réaction de position fournissant au contrôleur un signal représentant la position de l'élément mobile du dispositif de commande.

11. Absorbeur de vibrations selon la revendication 10, caractérisé en ce que ledit contrôleur (44) est programmé pour fournir du fluide hydraulique vers le dispositif de commande (32) sous une pression proportionelle au carré de la fréquence de la force d'excitation de vibration du système principal.

12. Absorbeur de vibrations selon la revendication 9, caractérisée en ce que ledit moyen à cylindre et piston comporte des manchons télescopiques (34, 36).

13. Absorbeur de vibrations selon la revendication 5, caractérisé en ce que le moyen de base (20) comporte un élément de base en une seule pièce ayant une plate-forme plate (51) s'étendant en direction longitudinale de l'élément de base et destiné d'être attachée fixement au système enclin à vibrer, et ayant en outre trois plaques parallèles (53, 55, 57) s'étendant latéralement et perpendiculairement par rapport à la plate-forme, la plaque (55) disposé centralement ayant une hauteur sensiblement différente à la hauteur des deux plaques extérieures (53, 57) qui ont chacune la même hauteur, chacune de ces plaques ayant deux ouvertures (59, 61, 63, 65, 67, 69) espacées lateralement d'une distance égale et à diamètre égal s'étandant à travers ces plaques de sorte que les axes des ouvertures soient perpendiculaires par rapport aux plaques et les ouvertures (59, 61, 67, 69) pratiquées dans les plaques extérieures étant situées en une hauteur identique au-dessus de la plateforme tandis que les ouvertures (63, 65) pratiquées dans la plaque centrale se trouvent en une hauteur considérablement différente mais chacune à la même hauteur audessus de la plate-forme de sorte que les ouvertures forment deux séries parallèles et latéralement espacées de trois ouvertures chacune, les ouvertures de chaque série ayant des axes parallèles qui sont aussi parallèles à mais équidistants et latéralement espacées des axes parallèles de l'autre série d'ouvertures, et que les ouvertures de chaque série forment les coins d'un triangle de façon à être décalée l'une de l'autre en deux directions perpendiculaires coplanaires, et les ouvertures de chaque plaque étant situées dans une partie en forme de I de la plaque comportant deux traverses parallèles (71, 73) passant au-dessus et au-dessous des ouvertures et ayant une âme de support (75) située entre ces ouvertures, en ce que les deux moyens de masselotte (11, 12) sont deux masselottes identiques s'étendant longitudinalement le long de l'élément de base et positionnées aux côtés latéraux opposés de cet élément de base, ces masselottes ayant des plaques (21, 23, 25, 27, 29, 31) s'étendant parallèlement aux plaques (53, 55, 57) de l'élément de base et étant situées avec espacement longitudinal sélectionné sur les côtés opposés de ces plaques, de l'élément de base, de sorte que chaque masselotte air trois séries espacées longitudinalement de plaques espacées longitudinalement et les plaques de chaque série de plaques de chaque masselotte étant situées aux côtés opposés d'une plaque de l'élément de base avec espacement longitudinal sélectionné entre ces plaques, les plaques des masselottes ayant des ouvertures (33, 35, 37, 39, 41, 43) à diamètre choisi égal aux diamètres des ouvertures des plaques de la plate-forme et ayant des axes parallèles aux axes des ouvertures des plaques de l'élément de base qu'elles chevauchent et les ouvertures de chaque série des plaques de chaque masselotte étant coaxiales, et en ce qu'une goupille (71, 73, 75) s'étend par chacune des six séries d'ouvertures chevauchantes formées par les ouvertures des plaques de ladite plate-forme et les ouvertures des plaques des masselottes pour former une connexion pendulaire trifilaire entre chacune des masselottes et l'élément de base pour suspendre chaque masselotte à l'élément de base pour mouvement pendulaire le long d'un arc et parallèlement aux plaques de l'élément de base par cette connexion pendulaire trifilaire entre les goupilles et les séries d'ouvertures chevauchantes.

14. Absorbeur de vibrations selon la revendication 13, caractérisé en ce que les plaques extérieures (53, 57) et leurs ouvertures (59, 61, 67, 69) de l'élément de base (20) se trouvent à une plus grande hauteur au-dessus de la plateforme (51) que la plaque centrale (55) et ses ouvertures (63, 65).

15. Absorbeur de vibrations selon la revendication 13, caractérisé en ce que chaque goupille (71, 73, 75) est formée par une seule pièce massive ayant des sections cylindriques s'étendant à travers les ouvertures des plaques de l'élément de base (20) et de la masselotte (11, 12) qu'elle relie à l'élément de base, la goupille ayant en outre des colliers circonfèrentiels (83, 85) solidaires de la goupille et situés dans les espaces longitudinaux entre l'ouverture de la plaque de l'élément de base et les ouvertures des plaques de la masselotte par lesquelles la goupille s'étend, ces colliers étant amincés radialement vers l'extérieur de façon à réduire le contact à friction entre les masselottes et l'élément de base pendant le mouvement pendulaire.

16. Absorbeur de vibrations selon la revendication 13, caractérisé en ce que le moyen de ressort (18) comporte deux ressorts hélicoïdaux parallèles s'étendant latéralement entre les masselottes (11, 12) transversalement par rapport à ladite direction prédéterminée et ayant des extrémités meulées orientées perpendiculairement à l'axe des ressorts, des porte-ressorts (28, 30) étant portés par les masselottes pour recevoir les extrémités meulées des ressorts hélicoïdaux, et en ce que les ressorts hélicoïdaux ont une longueur sélectionnée de façon à être en compression sélectionnée pendant tous les modes de fonctionnement de l'absorbeur de vibrations.

17. Absorbeur de vibrations selon la revendication 16, caractérisé en ce que lesdits ressorts (18) ont une longueur, un diamètre et une élasticité choisis pour être statiquement stables sous toutes les conditions de fonctionnement.

18. Absorbeur de vibrations selon la revendication 16, caractérisé en ce que les fréquences propres transversale et axial des ressorts hélicoïdaux (18) sont choisies de sorte que chaque ressort hélicoïdal soit dégréglé des vibrations anticipées du système pour empêcher la résonance.

19. Absorbeur de vibrations selon la revendication 18, caractérisé en ce que la compression des ressorts hélicoïdaux et la masse des masselottes sont sélectionnées, et en ce que chaque connexion pendulaire trifilaire (51, 52, 53) entre les masselottes (11, 12) et l'élément de base (20) est disposée de sorte que la ligne de la force combinée appliquée par les ressorts (18) et par la charge d'inertie aux masselottes soit toujours située entre deux des connexions trifilaires prévues entre l'une desdites masselottes et l'élément de base de sorte que les goupilles (71, 73, 75) soient toujours sous charge de compression dans leurs ouvertures pour obtenir la stabilité géométrique des masselottes lors de leur mouvement pendulaire complet par rapport à l'élément de support.

20. Absorbeur de vibrations selon l'une quelconque des revendications 13 à 19, caractérisé en ce qu'une douille à faible friction est située dans chacune des ouvertures de l'élément de base (20) et des masselottes.

21. Absorbeur de vibration selon l'une quelconque des revendications 16 à 20, caractérisé en ce que les plaques (53, 55, 57) de l'élément de base ont une épaisseur approximativement égale au double de l'épaisseur des plaques (21, 23, 25, 27, 29, 31) des masselottes.

22. Absorbeur de vibrations selon l'une quelconque des revendications 13 à 21, caractérisé en ce que des butées (99) en matière souple sont dimensionnées de façon appropriée et sont portées par les masselottes (11, 12) pour limiter leur mouvement et pour empêcher un contact métallique entre les éléments de construction de l'absorbeur de vibrations.

23. Utilisation de l'absorbeur de vibrations selon l'une quelconque des revendications 1 à 22 dans un hélicoptère ayant un fuselage et un rotor de sustentation constituant la source principale d'excitation de vibrations du fuselage, l'absorbeur de vibration étant attaché fixement au fuselage pour contrôler les vibrations du fuselage.

24. Utilisation selon la revendication 23, caractérisée par un moyen de contrôle (47) fonctionnant en réponse à la vitesse de rotation en tours par minute du rotor pour changer la force appliquée par les ressorts aux moyens de masselotte (11, 12) en vue de changer la fréquence propre de l'absorbeur de vibrations en fonction de la vitesse de rotation en tours par minute du rotor affin de maintenir la relation appropriée entre la fréquence propre de l'absorbeur de vibrations et la fréquence produite par la vitesse de rotation du rotor en tours par minute.

0 008 585

FIG. 1

HELICOPTER VIBRATION

ROTOR RPM (%)

FIG.2

MASS 1

MASS 2

FIG.3

FIG.4

M₁

M₂

1

**0 008 585**

FIG. 5

PRESS. SIGNAL

CONTROLLER

POSITION FEEDBACK
FLEX. PRESS LINE

POSITION FEEDBACK
A/C SUPPLY PRESS.
HYD. RETURN LINE

COMMON PRESS. LINE

YAW

FIG. 6

FIG. 7

FIG. 8

YAW

PITCH

FUSELAGE

DIRECTION OF
VIBRATION SOURCE

FIG. 9

32

34

18

12

44

42

4

36

45

38

40

FROM
COMMON
PRESS.
LINE 54

PRESS.
FROM
FLEXIBLE
PRESS. LINE 52

POSITION
FEEDBACK
SIGNAL

0008 585

FIG.10

FIG.11

INTERNAL
SPRING
FORCE

$\rho$

$\rho \propto N_R^2$

$N_R \equiv$ ROTOR SPEED (RPM)

OPERATING RANGE

BIAS

$N_R$   90%   120%

FIG.12

FIG.13

FIG.14

FIG.15

VIBRATION
ABSORBER
NATURAL
FREQUENCY
RATIO
$\dfrac{Wn}{W}$

SPRING RATE
COMPENSATED
PENDULUM

SIMPLE PENDULUM

PENDULUM ANGULAR MOTION

*FIG. 16*

TRANSLATES
THROUGH ARC
MOTION SHOWN

VERTICAL

LATERAL

LONGITUDINAL